# EUROPÄISCHE PATENTANMELDUNG

(11) **EP 4 293 445 A1**
(43) Veröffentlichungstag der Anmeldung: **20.12.2023**
(21) Anmeldenummer: 22178970.4
(22) Anmeldetag: 14.06.2022
(51) Int. Cl.: G05B 19/401, G06N 3/08

(54) **HERSTELLUNGSGERÄT ZUM HERSTELLEN EINES DENTALOBJEKTES**

(71) Anmelder: Ivoclar Vivadent AG, 9494 Schaan (LI)
(72) Erfinder: SENTI, Theresa Sujata Maria, 9497 Triesenberg (LI)
(74) Vertreter: Baldus, Oliver

(57) **Zusammenfassung**

Die vorliegende Erfindung betrifft ein Herstellungsgerät (100) zum Herstellen eines Dentalobjektes (101), mit einer elektronischen Kamera (103) zum Erfassen eines Bilddatensatzes (107) des zu bearbeitenden Dentalobjekts (101); und einer Steuereinrichtung (105) zum Ermitteln der Steuerdaten für eine Herstellung des Dentalobjektes (101) auf Basis des Bilddatensatzes (107).

## Beschreibung

Die vorliegende Erfindung betrifft ein Herstellungsgerät zum Herstellen eines Dentalobjektes und ein Herstellungsverfahren zum Herstellen.

Gegenwärtig werden Dentalobjekte manuell hergestellt, so dass ein Zahntechniker die Herstellungsparameter an dem jeweiligen Herstellungsgerät selbst auswählt. Der Zahntechniker wählt beispielsweise die richtigen Programme für die Herstellungsgeräte aus, welcher Träger für das Dentalobjekt zum Einsatz kommt, welche Regeln es bei der Platzierung des Dentalobjektes zu beachten gilt, oder bei welchen Materialien und in welchen Situationen die Herstellungsparameter wie angepasst werden müssen. In der Realität zeigt sich jedoch, dass dieses spezifische Fachwissen zur Herstellung von Dentalobjekten nicht bei allen Benutzern vorhanden ist.

Es ist daher die technische Aufgabe der vorliegenden Erfindung, die Herstellung eines Dentalobjektes durch ein Herstellungsgerät zu vereinfachen und zu automatisieren.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Herstellungsgerät zum Herstellen eines Dentalobjektes gelöst mit, einer elektronischen Kamera zum Erfassen eines Bilddatensatzes des zu bearbeitenden Dentalobjekts; und einer Steuereinrichtung zum Ermitteln der Steuerdaten für eine Herstellung des Dentalobjektes auf Basis des Bilddatensatzes. Durch das Herstellungsgerät wird beispielsweise der technische Vorteil erreicht, dass Herstellungsparameter als mögliche Steuerdaten automatisch je nach Dentalobjekt eingestellt werden können. Auf diese Weise kann die Herstellung des Dentalobjektes vereinfacht werden und eine fehlerhafte manuelle Auswahl falscher Herstellungsparameter durch einen Benutzer kann verhindert werden.

In einer technisch vorteilhaften Ausführungsform des Herstellungsgeräts ist das Herstellungsgerät ausgebildet, das zu bearbeitende Dentalobjekt vor der Kamera zu drehen. Dadurch wird beispielsweise der technische Vorteil erreicht, dass das Dentalobjekt aus unterschiedlichen Richtungen durch die elektronische Kamera erfasst werden kann. Aus jeder dieser Richtungen kann ein Bilddatensatz erhalten werden, der wiederum zum Ermitteln der Steuerdaten verwendet werden kann. Hierdurch können die Steuerdaten genauer ermittelt werden.

In einer weiteren technisch vorteilhaften Ausführungsform des Herstellungsgeräts ist das Herstellungsgerät ausgebildet, das zu bearbeitende Dentalobjekt mit Licht einer oder mehrerer vorgegebener Wellenlängen zu beleuchten. Dadurch wird beispielsweise der technische Vorteil erreicht, dass das Dentalobjekt mit Licht unterschiedlicher Wellenlänge beleuchtet werden kann. Zu jeder dieser Wellenlängen kann ein Bilddatensatz erhalten werden, der wiederum zum Ermitteln der Steuerdaten verwendet werden kann. Hierdurch können die Steuerdaten ebenfalls genauer ermittelt werden.

In einer weiteren technisch vorteilhaften Ausführungsform des Herstellungsgeräts umfasst die Steuereinrichtung einen selbstlernenden Algorithmus zum Ermitteln der Steuerdaten. Dadurch wird beispielsweise der technische Vorteil erreicht, dass sich die Steuereinrichtung an unterschiedliche Dentalobjekte anlernen lässt und zu diesen jeweils geeignete Steuerdaten ermittelt werden können.

In einer weiteren technisch vorteilhaften Ausführungsform des Herstellungsgeräts umfasst der selbstlernende Algorithmus ein künstliches neuronales Netz. Dadurch wird beispielsweise der technische Vorteil erreicht, dass ein Ermitteln der Steuerdaten effizient durchgeführt werden kann.

In einer weiteren technisch vorteilhaften Ausführungsform des Herstellungsgeräts ist die Steuereinrichtung ausgebildet, eine Größe, einen Typ, ein Material und/oder einen Verarbeitungsschritt des herzustellenden Dentalobjekts auf Basis des Bilddatensatzes zu ermitteln. Dadurch wird beispielsweise der technische Vorteil erreicht, dass Eigenschaften des Dentalobjekts verwendet werden, aus denen sich geeignete Steuerparameter ermitteln lassen.

In einer weiteren technisch vorteilhaften Ausführungsform des Herstellungsgeräts ist die Steuereinrichtung ausgebildet, eine Position und/oder eine Orientierung des zu bearbeitenden Dentalobjekts auf Basis des Bilddatensatzes zu ermitteln. Die Position und/oder Orientierung kann auch gegenüber einer Infrarotkamera ermittelt werden. Dadurch wird beispielsweise der technische Vorteil erreicht, dass sich aus der Position und/oder eine Orientierung ebenfalls geeignete Steuerparameter ermitteln lassen.

In einer weiteren technisch vorteilhaften Ausführungsform des Herstellungsgeräts umfasst das Herstellungsgerät einen Brennofen. Dadurch wird beispielsweise der technische Vorteil erreicht, dass sich ein Brennen des Dentalobjektes automatisieren lässt.

In einer weiteren technisch vorteilhaften Ausführungsform des Herstellungsgeräts ist die Steuereinrichtung ausgebildet, eine Temperatur für eine Herstellung des Dentalobjektes auf Basis des Bilddatensatzes zu ermitteln. Dadurch wird beispielsweise der technische Vorteil erreicht, dass das Dentalobjekt mit der richtigen Temperatur gebrannt werden kann.

In einer weiteren technisch vorteilhaften Ausführungsform des Herstellungsgeräts umfasst das Herstellungsgerät eine Fräseinrichtung. Dadurch wird beispielsweise der technische Vorteil erreicht, dass sich ein Fräsen des Dentalobjektes automatisieren lässt.

In einer weiteren technisch vorteilhaften Ausführungsform des Herstellungsgeräts ist die Steuereinrichtung ausgebildet, einen Fräsparameter, ein Fräswerkzeug oder den Zustand eines Fräswerkzeuges des zu bearbeitenden Dentalobjekts auf Basis des Bilddatensatzes zu ermitteln. Dadurch wird beispielsweise der technische Vorteil erreicht, dass das Fräsen des Dentalobjektes korrekt ausgeführt werden kann.

Gemäß einem zweiten Aspekt wird die technische Aufgabe durch ein Herstellungsverfahren zum Herstellen eines Dentalobjektes gelöst, mit den Schritten eines Erfassens eines Bilddatensatzes des zu bearbeitenden Dentalobjekts durch eine elektronische Kamera; und eines Ermittelns der Steuerdaten für eine Herstellung des Dentalobjektes auf Basis des Bilddatensatzes durch eine Steuereinrichtung. Durch das Herstellungsverfahren lassen sich die gleichen Vorteile erreichen, wie durch das Herstellungsgerät nach dem ersten Aspekt.

In einer technisch vorteilhaften Ausführungsform des Herstellungsverfahrens wird das Dentalobjekt mit den ermittelten Steuerdaten hergestellt. Dadurch wird beispielsweise der technische Vorteil erreicht, dass sich eine Herstellung des Dentalobjekts automatisieren lässt.

In einer weiteren technisch vorteilhaften Ausführungsform des Herstellungsverfahrens wird eine Größe, ein Typ, ein Material, ein Verarbeitungsschritt des herzustellenden Dentalobjekts, oder eine Anzahl und/oder ein gegenseitiger Abstand von mehreren zu bearbeitenden Dentalobjekten auf Basis des Bilddatensatzes ermittelt. Dadurch wird beispielsweise der technische Vorteil erreicht, dass eine entsprechende Steuerung unter Berücksichtigung der Anzahl oder des Abstandes durchgeführt werden kann.

In einer weiteren technisch vorteilhaften Ausführungsform des Herstellungsverfahrens wird das Dentalobjekt durch einen Brennofen, eine Fräseinrichtung oder einen 3D-Drucker durchgeführt. Dadurch wird beispielsweise der technische Vorteil erreicht, dass das Herstellungsverfahren in Geräten durchgeführt wird, die besonders geeignet sind.

Ausführungsbeispiele der Erfindung sind in den Zeichnungen dargestellt und werden im Folgenden näher beschrieben.

Es zeigen:
- Fig. 1: eine schematische Abbildung eines Herstellungsgerätes für ein Dentalobjekt;
- Fig. 2: eine schematische Ansicht eines neuronalen Netzes; und
- Fig. 3: ein Blockdiagramm eines Herstellungsverfahrens zum Herstellen eines Dentalobjektes.

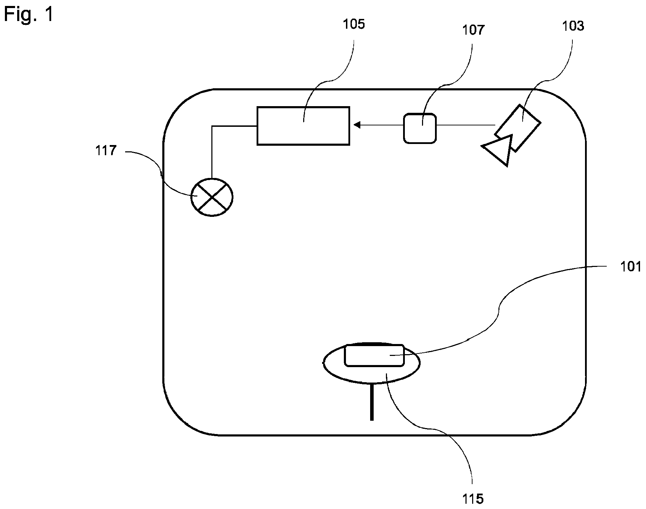

Fig. 1 zeigt eine schematische Abbildung eines Herstellungsgerätes 100 für ein Dentalobjekt 101. Das Dentalobjekt 101 ist beispielsweise eine Krone, eine Brücke, ein Veneer, ein Abutment, ein Inlay, ein Onlay, eine Schiene oder eine Teil- oder Vollprothese in unterschiedlichen Fertigungsstufen. Im Allgemeinen kann das Dentalobjekt 100 jedes Objekt im Dentalbereich sein, das im Rahmen eines Herstellungs- oder Bearbeitungsverfahrens hergestellt oder bearbeitet werden soll. Das Herstellungsgerät 100 ist beispielsweise ein Brennofen, eine Fräseinrichtung oder ein 3D-Drucker. Im Allgemeinen kann das Herstellungsgerät 100 jedes Gerät sein, das im Rahmen einer Herstellung oder Bearbeitung eines Dentalobjektes 101 verwendet werden kann.

Um ein Dentalobjekt 101 herzustellen, stellt bisher ein Benutzer zu verwendende Herstellungsparameter als Steuerdaten für das Herstellungsgerät 100 manuell ein. Wird beispielsweise eine große Restauration mit hoher Masse in einem Brennofen als Herstellungsgerät 100 hergestellt, so sollte eine andere Brenntemperatur gewählt werden, als wenn eine kleine Restauration gebrannt wird. Allerding sind die korrekten Steuerdaten für die Herstellung des Dentalobjektes 101 dem Benutzer nicht immer bekannt.

Daneben existieren noch weitere Faktoren, wie beispielsweise die Wahl eines geeigneten Brenngutträgers, eine Positionierung der Restauration auf dem Brenngutträger (in allen drei Raumrichtungen) und die Anzahl an Restaurationen und der Abstand zwischen den Restaurationen, die Einfluss auf das Brennergebnis haben. Dies kann vorteilhaft in einem Brennofen eingesetzt werden. Des Weiteren kommt es auch vor, dass bei der Entwicklung der Herstellungsgeräte und -materialien neue Erkenntnisse gewonnen werden, wie das Herstellungsgerät 100 am besten zu bedienen ist oder die Herstellungsmaterialien zu verarbeiten sind. Allerdings können diese neuen Erkenntnisse nur schlecht an einen Benutzer des Herstellungsgerätes 100 übermittelt werden.

Daher umfasst das Herstellungsgerät 100 eine elektronische Kamera 103, die das zu bearbeitenden Dentalobjekt 101 optisch erfasst und einen digitalen Bilddatensatz 107 erzeugt. Der Bilddatensatz 107 kann beispielsweise als Datei im Bitmap-oder JPG-Format vorliegen und bildet das Dentalobjekt 101 optisch ab. Das Herstellungsgerät 101 kann beispielsweise einen zusätzlichen Drehteller 115 umfassen um das Dentalobjekt 101 vor der Kamera 103 zu drehen. Auf diese Weise kann von dem Dentalobjekt 101 ein oder mehrere Bilddatensätze 107 aus unterschiedlichen Richtungen aufgenommen werden.

Zudem kann das Herstellungsgerät 100 eine durchstimmbare Lichtquelle 117 umfassen, die ein Licht mit unterschiedlicher Wellenlänge ausgeben kann. Auf diese Weise kann das Dentalobjekt 101 mit Licht einer vorgegebenen Wellenlänge bestrahlt werden und ein oder mehrere Bilddatensätze 107 bei der jeweiligen Wellenlänge erhalten werden.

Das Herstellungsgerät 100 umfasst weiter eine Steuereinrichtung 105, die den digitalen Bilddatensatz 107 analysiert und daraus Steuerdaten für eine Herstellung des Dentalobjektes 101 erzeugt. Die Steuereinrichtung 105 dient im Allgemeinen zur Steuerung des Herstellungsgerätes 100. Der Bilddatensatz 107 kann in einem externen Datenspeicher abgespeichert werden, wie beispielsweise in einem Cloud- oder Internetspeicher.

Beispielsweise kann die Steuereinrichtung 105 aus dem Bilddatensatz 107 einen Typ des Dentalobjektes 101, das verwendete Herstellungsmaterial und/oder den Verarbeitungsschritt ermitteln, in dem sich das Dentalobjekt 101 befindet. Aus diesen Eigenschaften lassen sich automatisch die Steuerdaten für das Dentalobjekt 101 ermitteln. Beispielsweise kann einem bestimmten Herstellungsmaterial eine zu verwendende Brenntemperatur als Steuerdaten zugeordnet werden.

Zu diesem Zweck umfasst die Steuereinrichtung 105 einen selbstlernenden Algorithmus, der zuvor durch eine Vielzahl von Bilddatensätzen 107 von unterschiedlichen Dentalobjekten 101 trainiert worden ist. Die Bilddatensätze 107 zu Trainingszwecken können aus unterschiedlichen Richtungen und unter Licht mit unterschiedlicher Wellenlänge aufgenommen worden sein. Zu jedem dieser Bilddatensätze 107 sind die zu verwendenden Steuerdaten vorgegeben. Um den selbstlernenden Algorithmus auszuführen, umfasst die Steuereinrichtung 105 einen Prozessor und einen digitalen Speicher, um den selbstlernenden Algorithmus und den Bilddatensatz 107 zu speichern.

Mit der Steuereinrichtung 105 kann die Herstellung des Dentalobjektes 101 gesteuert werden. Beispielsweise führt die Steuereinrichtung 105 vorgegebene Steuerprogramme aus oder stellt bestimmte Steuerungsparameter ein, wie beispielsweise eine Brenntemperatur oder Brenndauer. Zudem kann die Steuereinrichtung 105 die Lichtquelle 117 oder den Drehteller 115 ansteuern.

Wird dem selbstlernenden Algorithmus ein neuer Bilddatensatz 107 übergeben, kann der selbstlernende Algorithmus den Bilddatensatz 107 klassifizieren und die für die Herstellung zu verwendenden Steuerdaten ermitteln. Zu diesem Zweck kann der selbstlernende Algorithmus beispielsweise ein künstliches neuronales Netz umfassen, mit dem eine Ähnlichkeitsanalyse der Bilddatensätze 107 durchgeführt wird. Auf diese Weise kann ein Benutzer unabhängig von seiner Erfahrung und Ausbildung und automatisch ein optimales Herstellungsergebnis erhalten.

Die Ergebnisse des selbstlernenden Algorithmus können mit einer herkömmlichen Bilddatenanalyse kombiniert werden, um das die ermittelten Steuerdaten des selbstlernenden Algorithmus zu bestätigen oder erkannte Eigenschaften zu kombinieren. Anschließend können basierend auf des Bildanalyse weitere Entscheidungen getroffen werden. Dadurch wird der technische Vorteil erreicht, dass eine Bilddatenverarbeitung schneller durchgeführt werden kann.

Zudem können bestimmte Zustände des Herstellungsgerätes 100, wie beispielsweise eine Kalibration eines Brennofens, erkannt werden und Empfehlungen und Korrekturen an einen Benutzer ausgegeben werden, beispielsweise für eine Position eines Kalibrierungskörpers. Anschließend kann ein Herstellungsprogramm gestartet werden. Durch die elektronische Kamera 103 kann zudem erkannt werden, wenn das Dentalobjekt 101 in das Herstellungsgerät 100 gestellt wird oder aus diesem herausgenommen wird. Falls in einem Brennofen hierbei die Temperatur zu hoch ist, kann eine entsprechende Warnung an den Benutzer ausgegeben werden, wie beispielsweise akustisch oder optisch. Zudem kann ein Kalibrationskörper erkannt und vermessen werden, beispielsweise vor und nach dem Kalibrationsprogramm und ein Korrekturparameter automatisch ermittelt werden.

Weiter können die Positionierung, Ausrichtung und die gegenseitigen Abstände der Dentalobjekte 101 im Herstellungsgerät 100 durch einen Algorithmus überprüft werden. Beispielsweise ist es möglich, dass Dentalobjekte 101 näher zusammenstehen als empfohlen. Auch in diesem Fall kann eine entsprechende Warnung an den Benutzer ausgegeben werden, wie beispielsweise akustisch oder optisch. Außerdem kann überprüft werden, wie das Dentalobjekt 101 im Herstellungsgerät 100 in Bezug zur Kamera 103 ausgerichtet oder orientiert ist. Die Kamera 103 kann eine RGB-Kamera und/oder eine Infrarotkamera sein (IR-Kamera). Durch die Infrarotkamera kann beispielsweise eine Entnahmetemperatur gesteuert werden, die überwacht wird. Anhand der RGB-Kamera kann zuvor festgelegt werden, welche Bildpunkte hierbei relevant sind. Falls die Ausrichtung oder Orientierung des Dentalobjektes 101 von einer vorgegebenen Ausrichtung oder Orientierung abweicht, kann ebenfalls eine entsprechende Warnung an den Benutzer ausgegeben werden, wie beispielsweise akustisch oder optisch.

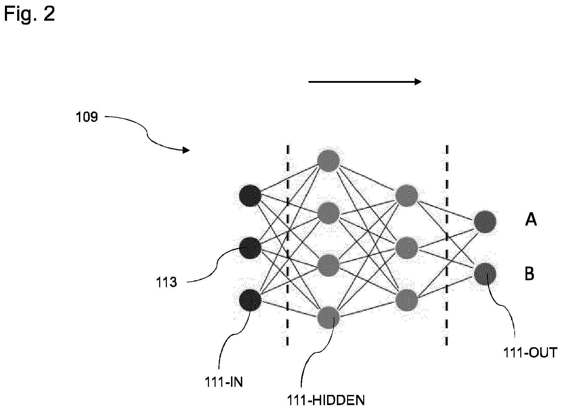

Fig. 2 zeigt eine schematische Ansicht eines künstlichen neuronalen Netzes 109. Das künstliche neuronale Netz 109 ist ein Netz aus künstlichen Neuronen und kann zum Ermitteln der Steuerdaten verwendet werden. Das künstliche neuronale Netz 109 umfasst eine Eingabeschicht 111-IN mit einer Anzahl an Neuronen 113, die beispielsweise der Anzahl der Bildpunkte in dem Bilddatensatz 107 entspricht. In diesem Fall wird jeder Punkt aus dem Bilddatensatz 107 in ein eigenes Neuron 113 eingegeben.

Die Informationen aus dem Bilddatensatz 107 werden an die Neuronen 113 verborgener Schichten 111-Hidden weitergeleitet. Dabei findet eine individuelle Gewichtung jedes Signals von einem Neuron 113 zu einem anderen Neuron 113 statt.

Anschließend wird das Ergebnis an der Ausgabeschicht 111-OUT als Steuerdaten A oder B ausgegeben. Die Anzahl der Neuronen 113 der Ausgabeschicht 111-OUT entspricht beispielsweise der Anzahl der möglichen Steuerdaten zur Herstellung des Dentalobjektes 101.

Bei einem Anlernen des neuronalen Netzes 109 wird eine Vielzahl von Bilddatensätzen 107 zugeführt, von denen die jeweiligen Steuerdaten bekannt sind. Das neuronale Netz 109 lernt durch eine Modifikation der Gewichte zwischen den Neuronen 113. Dabei werden die Gewichte des neuronalen Netzes 109 so lange angepasst, bis die ausgegebenen Steuerdaten denjenigen Steuerdaten entsprechen, die für den Bilddatensatz 107 bekannt sind. Wird anschließend ein neuer Bilddatensatz 107 zugeführt, werden die Steuerdaten von einem angelernten Bilddatensatz 107 ausgegeben, der zu dem eingegebenen Bilddatensatz 107 die größte Ähnlichkeit aufweist.

Im Allgemeinen kann eine Kombination aus Faltungsschichten (Convolutional Layer) und voll verbundenen Schichten verwendet werden (Dense Layer). Als Aktivierungsfunktionen können Sigmoid-, Tanh- oder ReLU-Funktionen verwendet werden. Nach jeder Schicht kann eine Batch-Normalisierung durchgeführt werden.

Die Erfindung lässt sich beispielsweise durch folgenden Quellcode ausführen:

```
     from tensorflow import keras
     import CV2
     # load neural net
     model = keras.models.load_model("saved_models/model")
     image = getimagefromcamera()
     image = cv2.rezise(img,(img_width, img_height))
     # classify image
     pred_class = model.predict(image)
     switch(pred_class){
          case class1:
               return parameterset1;
          case class2:
               return parameterset2;
          case class3:
               return parameterset3; };
```

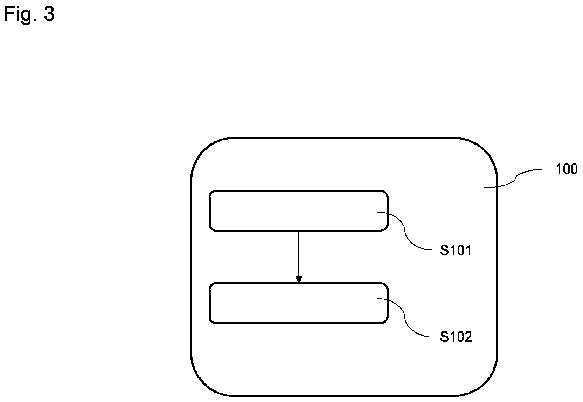

Fig. 3 zeigt ein Blockdiagramm eines Herstellungsverfahrens zum Herstellen eines Dentalobjektes 101. In Schritt S101 wird der Bilddatensatz 107 des zu bearbeitenden Dentalobjekts 101 durch eine elektronische Kamera 103 erfasst. In Schritt S102 werden die Steuerdaten für eine Herstellung des Dentalobjektes 101 auf Basis des Bilddatensatzes 107 durch die Steuereinrichtung 105 bestimmt.

Anschließend wird das Dentalobjekt 101 mit den ermittelten Steuerdaten hergestellt oder bearbeitet. Auf diese Weise kann eine Herstellung des Dentalobjektes 101 automatisiert und vereinfacht werden.

Ist das Herstellungsgerät 100 ein Brennofen, kann die Steuereinrichtung 105 beispielsweise eine Temperatur und eine Brenndauer als Steuerdaten für eine Herstellung des Dentalobjektes 101 auf Basis des Bilddatensatzes 107 ermitteln. Ist das Herstellungsgerät 100 eine Fräseinrichtung, kann die Steuereinrichtung 105, einen Fräsparameter, wie beispielsweise eine Drehzahl, oder ein zu verwendendes Fräswerkzeug als Steuerdaten für das zu bearbeitende Dentalobjekts 101 ermitteln. Im Allgemeinen können die Steuerdaten alle Daten umfassen, die für die Herstellung des Dentalobjektes 101 verwendet werden können.

Auf Basis des Bilddatensatzes 107 kann zudem eine Größe, ein Volumen, ein Typ, ein Material und/oder ein Verarbeitungsschritt des herzustellenden Dentalobjekts 101 ermittelt werden. Diesen Eigenschaften des Dentalobjektes 101 können dann jeweils wiederum bestimmte Steuerdaten für die Herstellung des Dentalobjektes 101 zugeordnet werden. Auf Basis des Bilddatensatzes 107 kann außerdem eine Position und/oder eine Orientierung des zu bearbeitenden Dentalobjekts 101 auf Basis des Bilddatensatzes 107 ermittelt werden. Auch diesen Eigenschaften des Dentalobjektes 101 können dann jeweils wiederum bestimmte Steuerdaten für die Herstellung des Dentalobjektes 101 zugeordnet werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Herstellungsgerät
- 101: Dentalobjekt
- 103: elektronischen Kamera
- 105: Steuereinrichtung
- 107: Bilddatensatz
- 109: neuronales Netz
- 111-IN: Eingabeschicht
- 111-OUT: Ausgabeschicht
- 113: Neuron
- 115: Drehteller
- 117: Lichtquelle

## Patentansprüche

1. Herstellungsgerät (100) zum Herstellen eines Dentalobjektes (101), mit:
- einer elektronischen Kamera (103) zum Erfassen eines Bilddatensatzes (107) des zu bearbeitenden Dentalobjekts (101); und
- einer Steuereinrichtung (105) zum Ermitteln der Steuerdaten für eine Herstellung des Dentalobjektes (101) auf Basis des Bilddatensatzes (107).

2. Herstellungsgerät (100) nach Anspruch 1, wobei das Herstellungsgerät (100) ausgebildet ist, das zu bearbeitende Dentalobjekt (101) vor der Kamera (103) zu drehen.

3. Herstellungsgerät (100) nach einem der vorangehenden Ansprüche, wobei das Herstellungsgerät (100) ausgebildet ist, das zu bearbeitende Dentalobjekt (101) mit Licht einer oder mehrerer vorgegebener Wellenlängen zu beleuchten.

4. Herstellungsgerät (100) nach einem der vorangehenden Ansprüche, wobei die Steuereinrichtung (105) einen selbstlernenden Algorithmus zum Ermitteln der Steuerdaten umfasst.

5. Herstellungsgerät (100) nach einem der vorangehenden Ansprüche, wobei der selbstlernende Algorithmus ein künstliches neuronales Netz (109) umfasst.

6. Herstellungsgerät (100) nach einem der vorangehenden Ansprüche, wobei die Steuereinrichtung (105) ausgebildet ist, eine Größe, einen Typ, ein Material und/oder einen Verarbeitungsschritt des herzustellenden Dentalobjekts (101) auf Basis des Bilddatensatzes (107) zu ermitteln.

7. Herstellungsgerät (100) nach einem der vorangehenden Ansprüche, wobei die Steuereinrichtung (105) ausgebildet ist, eine Position und/oder eine Orientierung des zu bearbeitenden Dentalobjekts (101) auf Basis des Bilddatensatzes (107) zu ermitteln.

8. Herstellungsgerät (100) nach einem der vorangehenden Ansprüche, wobei das Herstellungsgerät (100) einen Brennofen umfasst.

9. Herstellungsgerät (100) nach Anspruch 8, wobei die Steuereinrichtung (105) ausgebildet ist, eine Temperatur für eine Herstellung des Dentalobjektes (101) auf Basis des Bilddatensatzes (107) zu ermitteln.

10. Herstellungsgerät (100) nach einem der Ansprüche 1 bis 7, wobei das Herstellungsgerät (100) eine Fräseinrichtung umfasst.

11. Herstellungsgerät (100) nach Anspruch 10, wobei die Steuereinrichtung (105) ausgebildet ist, einen Fräsparameter, ein Fräswerkzeug oder den Zustand eines Fräswerkzeuges des zu bearbeitenden Dentalobjekts (101) auf Basis des Bilddatensatzes (107) zu ermitteln.

12. Herstellungsverfahren zum Herstellen eines Dentalobjektes (101), mit den Schritten:
- Erfassen (S101) eines Bilddatensatzes (107) des zu bearbeitenden Dentalobjekts (101) durch eine elektronische Kamera (103); und
- Ermitteln (S102) der Steuerdaten für eine Herstellung des Dentalobjektes (101) auf Basis des Bilddatensatzes (107) durch eine Steuereinrichtung (105).

13. Herstellungsverfahren nach Anspruch 12, wobei das Dentalobjekt (101) mit den ermittelten Steuerdaten hergestellt wird.

14. Herstellungsverfahren nach Anspruch 12, wobei eine Größe, ein Typ, ein Material, ein Verarbeitungsschritt des herzustellenden Dentalobjekts, oder eine Anzahl und/oder ein gegenseitiger Abstand von mehreren zu bearbeitenden Dentalobjekten (101) auf Basis des Bilddatensatzes (107) ermittelt wird.

15. Herstellungsverfahren nach Anspruch 12, wobei das Dentalobjekt (101) durch einen Brennofen, eine Fräseinrichtung oder einen 3D-Drucker durchgeführt wird.
